## Europäisches Patentamt
## European Patent Office
## Office européen des brevets

(11) Veröffentlichungsnummer: **0 176 704
B1**

# EUROPÄISCHE PATENTSCHRIFT

(45) Veröffentlichungstag der Patentschrift:
**07.12.88**

(51) Int. Cl.⁴: **G 09 F 3/06**

(21) Anmeldenummer: **85109895.4**

(22) Anmeldetag: **06.08.85**

(54) **Von einer Umfangfläche eines Körpers aufschrumpfbares, mehrschichtiges Haftetikett.**

(30) Priorität: **16.08.84 DE 3430162**

(43) Veröffentlichungstag der Anmeldung:
**09.04.86 Patentblatt 86/15**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**GB-A- 1 387 619
US-A- 3 542 229
US-A- 3 927 484
US-A- 4 190 168
US-A- 4 287 274**

**PROSPEKT DER FA. ZWECKFORM WERK GMBH,
ANWENDUNGS-INFO, veröffentlicht im März 1983**

(73) Patentinhaber: **Zweckform Etikettiertechnik
Gesellschaft mit beschränkter Haftung,
Industriestrasse, D-8150 Holzkirchen (DE)**

(72) Erfinder: **Will, Rolf, Osterleite 4, D-8170 Bad Tölz (DE)**
Erfinder: **Ast, Hans-Peter, Haidstrasse 38 b,
D-8150 Holzkirchen (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

## Beschreibung

Die Erfindung betrifft ein auf der Umfangsfläche eines Körpers, insbesondere einer Trockenbatterie, aufschrumpfbares, mehrschichtiges Haftetikett nach dem Oberbegriff des Anspruchs 1. Ein solches Haftetikett ist in der EP-A-0 129 850 beschrieben.

Häufig werden derartige Haftetiketten so auf den Körper aufgebracht, dass sich ihre längs einer Mantellinie der Umfangsfläche des Körpers erstreckenden Kanten überlappen. Dabei zeigte sich, dass sich nach einigen Stunden der Randbereich nächst der aussen liegenden Kante abheben kann, was an der Eigensteifigkeit des Etiketts und der sich daraus ergebenden, besonders nach dem Aufschrumpfen entstehenden Rückstellkraft des Etiketts liegt.

Aufgabe der Erfindung ist es zu erreichen, dass sich die aussen liegende, sich längs der Mantellinie der Umfangsfläche des Körpers erstreckende Kante mit dem an sie angrenzenden Randbereich nicht in der beschriebenen Weise abheben kann.

Die Lösung dieser Aufgabe ist im Kennzeichen des Anspruchs 1 angegeben.

Die erfindungsgemäss vorzusehende Schnittstanzung bricht in dem kritischen Bereich die Eigensteifigkeit und daher die Rückstellkraft. Andererseits ist aber die Schnittstanzung von aussen nicht sichtbar, wenn gemäss Anspruch 2 vorgegangen wird.

Schnittstanzungen, die sich besonders bewährt haben, sind in den Ansprüchen 3 bis 5 angegeben.

Die Erfindung wird im folgenden an einem Ausführungsbeispiel unter Hinweis auf die beigefügten Zeichnungen beschrieben.

Fig. 1 zeigt ein Haftetikett im Querschnitt.

Fig. 2 zeigt unterschiedliche Schnittstanzungen.

Fig. 3 zeigt ein Verfahren zur Herstellung des Haftetiketts mit der Schnittstanzung.

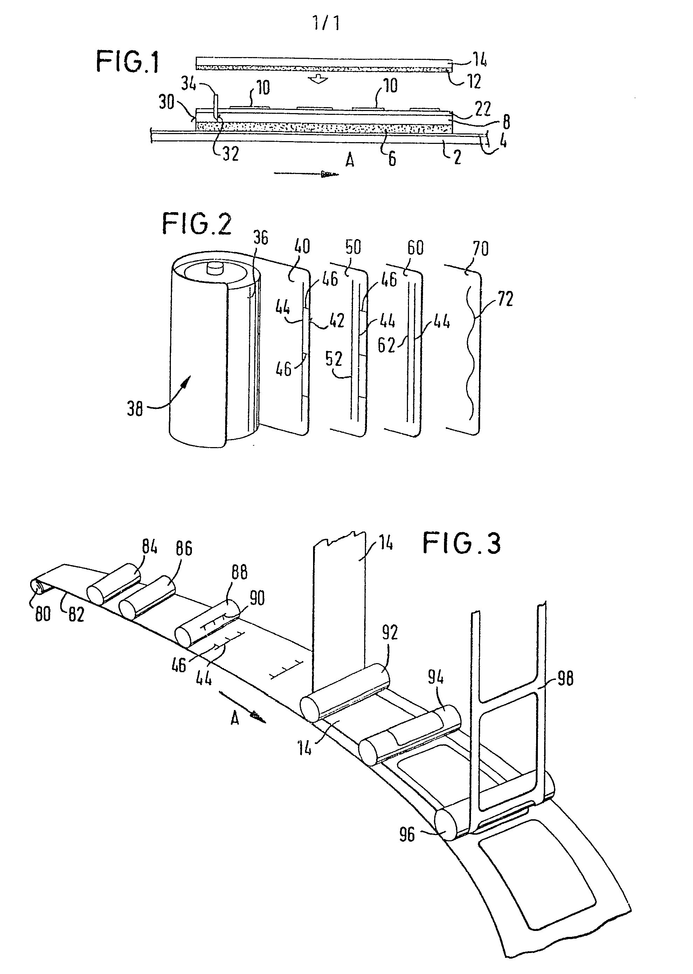

Das Haftetikett nach Fig. 1 ist ablösbar auf einer Unterlage 2 mit einer klebstoffabweisenden Schicht 4, insbesondere aus Silikon, aufgebracht. Es besteht aus einer Trägerschicht 8, die unterseitig mit einer Haftklebstoffschicht 6 versehen ist und oberseitig eine Aufdampfschicht 22 trägt, auf der sich ein Aufdruck 10 befindet. Der Aufdruck ist von einer Kaschierfolie 14 abgedeckt, deren Unterseite mit einer Kaschierkleberschicht 12 versehen ist.

Die Unterlage 2 hat die Form eines Bandes, das bei der Herstellung der Etiketten und beim Ablösen der Etiketten zum Aufbringen auf zu etikettierende Körper in Richtung des Pfeils A läuft.

Nächst seiner stromabliegenden Kante 30 sind die Aufdampfschicht 22 und die Trägerschicht 8 mit einer Schnittstanzung 32 versehen, die durch ein Stanzmesser 34 zu erzeugen ist.

Fig. 2 zeigt eine Trockenbatterie 36, um die ein Etikett 38 gelegt ist; nur der Randbereich 40 steht noch ab. Nächst der Kante 42 des Randbereichs 40 befindet sich eine gerade Schnittstanzung 44 mit Zweigen 46, die bis zur Kante 42 verlaufen.

Rechts daneben ist eine Ausführungsform eines Randbereichs 50 eines Etiketts dargestellt, das innenseitig neben der geraden Schnittstanzung 44 und den Zweigen 46 noch eine zweite gerade Schnittstanzung 52 aufweist.

Rechts daneben ist ein Randbereich 60 dargestellt, der zwei gerade Schnittstanzungen 44 und 62 aufweist.

Rechts daneben ist ein Randbereich 70 dargestellt, der eine schlangenförmige Schnittstanzung 72 aufweist.

Fig. 3 zeigt einen von einer Rolle 80 abgezogenen Schichtverbund 82 mit den Schichten 2, 4, 6, 8 und 22 nach Fig. 1. Dieser Schichtverbund wird oberseitig mittels zweier Druckrollen 84 und 86 mit einem Aufdruck versehen, der dem Aufdruck 10 nach Fig. 1 entspricht. Anschliessend gelangt er unter eine Stanzrolle 88 mit einem Stanzmesser 90, das die Stanzungen 44 und 46 nach Fig. 2 erzeugt. Daraufhin wird mittels einer Umlenkrolle 92 die unterseitig mit einer Kaschierklebeschicht 12 versehene Kaschierfolie 14 auf den mit dem Aufdruck und der Schnittstanzung versehenen Schichtverbund aufgebracht. Aus dem so entstandenen Verbund werden mit einer Etikettenstanze 94 die Etiketten ausgestanzt. Mit einer anschliessenden Rolle 96 wird die um die ausgestanzten Etiketten verbleibende Matrix 98 abgezogen.

## Patentansprüche

1. Auf eine Umfangsfläche eines Körpers (20), insbesondere einer Trockenbatterie, aufschrumpfbares, mehrschichtiges Haftetikett mit einer Trägerschicht (8) für einen von aussen sichtbaren, mit einer durchsichtigen Schutzschicht (14) abgedeckten Aufdruck (10), dessen äusserste Schicht (14) durch eine wenigstens axial gereckte, durchsichtige, aufkaschierte Folie (14) aus schrumpfbarem Kunststoff gebildet ist, dadurch gekennzeichnet, dass die Trägerschicht (8) in der Nähe ihrer sich längs einer Mantellinie der Umfangsfläche des Körpers (20) erstreckenden Kante (30, 42), die nach dem Aufschrumpfen des Haftetiketts (38) die zu ihr parallele Kante überdeckt, mit wenigstens einer Schnittstanzung (32, 44, 46, 52, 62, 72) versehen ist.

2. Haftetikett nach Anspruch 1, dadurch gekennzeichnet, dass sich die Schnittstanzung (32, 44, 46, 52, 62, 72) nur durch die Trägerschicht (8) und gegebenenfalls durch den Aufdruck (10) sowie eine zwischen dem Aufdruck (10) und der Trägerschicht (8) befindliche Aufdampfschicht (22) erstreckt.

3. Haftetikett nach Anspruch 1 oder 2, dadurch gekennzeichnet, dass die Schnittstanzung (72) schlangenförmig ist.

4. Haftetikett nach Anspruch 1 oder 2, dadurch gekennzeichnet, dass die Schnittstanzung (44, 52, 62) gerade ist.

5. Haftetikett nach einem der vorhergehenden Ansprüche, dadurch gekennzeichnet, dass die Schnittstanzung (44) bis zur Kante (46) verlaufende Zweige aufweist.

## Revendications

1. Etiquette adhésive à plusieurs couches, rétractable sur la surface circonférentielle d'un corps (20), notamment d'une pile sèche, comportant une couche support (8) pour une impression (10) visible de l'extérieur, recouverte d'une couche de protection transparente (14), dont la couche extérieure (14) selon la demande de brevet P 3 322 309, est formée par une feuille (14) étirée pour le moins axialement, transparente, contrecollée, en matière synthétique rétractable, caractérisée en ce que la couche support (8) à proximité de son bord (30, 42), s'étendant le long d'une génératrice de la surface circonférentielle du corps (20), bord qui recouvre après le retrait de l'étiquette adhésive (38) le bord qui lui est parallèle, est munie d'au moins un découpage (32, 44, 46, 52, 62, 72).

2. Etiquette adhésive selon la revendication 1, caractérisée en ce que le découpage (32, 44, 46, 52, 62, 72) ne s'étend qu'à travers la couche de support (8) et éventuellement à travers l'impression (10) ainsi qu'à travers une couche de métallisation (22) située entre l'impression (10) et la couche support (8).

3. Etiquette adhésive selon la revendication 1 ou 2, caractérisée en ce que le découpage (72) est de configuration sinueuse.

4. Etiquette adhésive selon la revendication 1 ou 2, caractérisée en ce que le découpage (44, 52, 62) est de configuration rectiligne.

5. Etiquette adhésive selon l'une des revendications précédentes, caractérisée en ce que le découpage présente des ramifications s'étendant jusqu'au bord (46).

## Claims

1. Multilayered adhesive label shrinkable onto a circumferential surface of an object (20), in particular a dry battery, this label being provided with a substrate (8) for an externally visible imprint (10) covered with a transparent protective layer (14), whose outermost layer (14) is formed by an at least axially orientated, transparent, laminated-on film (14) of shrinkable plastic, characterized by the fact that substrate (8) is provided, adjacent to its edge (30, 42) extending along a surface line of the circumferential surface of the object (20) which, after shrinking on adhesive label (38), overlaps the edge parallel to it, with at least one series of punched cuts (32, 44, 46, 52, 62, 72).

2. Adhesive label, in accordance with Claim 1, characterized by the fact that the series of punched cuts (32, 44, 46, 52, 62, 72) only extends through substrate (8) and if necessary through the imprint (10), as well as a vapour-deposited layer (22) located between imprint (10) and substrate (8).

3. Adhesive label in accordance with Claim 1 or 2, characterized by the fact that the series of punched cuts (72) is undulating in form.

4. Adhesive label in accordance with Claim 1 or 2, characterized by the fact that the series of punched cuts (44, 52, 62) is straight.

5. Adhesive label in accordance with one of the preceding Claims, characterized by the fact that series of punched cuts (44) has vertical punched cuts running up to edge (46).

EP 0 176 704 B1

1/1

FIG.1

FIG.2

FIG.3